# FASCICULE DE BREVET EUROPEEN

(11) **EP 1 535 551 B1**
(45) Date de publication et mention de la délivrance du brevet: **05.08.2009**
(21) Numéro de dépôt: 04356185.1
(22) Date de dépôt: 26.11.2004
(51) Int. Cl.: A47J 27/09

(54) **Appareil de cuisson sous pression muni d'un dispositif de sécurité à la surpression, et joint d'étanchéité pour un tel appareil**
Dampfdruck-Kochtopf mit Sicherheitsvorrichtung für Überdruck, und Dichtung für solch einen Topf
Pressure cooker with overpressure safety device, and gasket for such a cooker

(30) Priorité: 27.11.2003 FR 0313935
(43) Date de publication de la demande: 01.06.2005
(73) Titulaire: SEB S.A., 69132 Ecully Cedex (FR)
(72) Inventeur: Seurat Guiochet, Claire Marie-Aurore, 21000 Dijon (FR); Anota, Daniel Jean-Marie, 21000 Dijon (FR)
(74) Mandataire: Martin, Didier Roland Valéry

(56) Documents cités:
- WO-A-01/72184
- CH-A- 682 538
- FR-A- 632 268
- FR-A- 2 796 542
- US-A- 4 434 909
- US-A- 5 927 183

## Description

La présente invention se rapporte au domaine technique général des appareils de cuisson sous pression, à usage domestique, tels que des autocuiseurs, comprenant une cuve et un couvercle destiné à être verrouillé sur la cuve pour former une enceinte de cuisson étanche, lesdits appareils étant destinés à assurer la cuisson sous pression de vapeur des aliments contenus dans la cuve.

La présente invention concerne plus particulièrement un appareil domestique de cuisson d'aliments sous pression comprenant d'une part une cuve pourvue d'une paroi latérale et d'autre part un couvercle destiné à être rapporté et verrouillé sur ladite cuve, lesdits couvercle et paroi latérale définissant, lorsque le couvercle est rapporté et verrouillé sur la cuve, un espace interstitiel annulaire présentant une section transversale initiale de dimension radiale prédéterminée, dite dimension initiale, ledit espace interstitiel étant destiné à accueillir un joint annulaire d'étanchéité conçu pour s'interposer entre la paroi latérale et le couvercle, de façon à réaliser une enceinte de cuisson sensiblement étanche.

Les appareils de cuisson sous pression à usage domestique, du genre autocuiseurs, sont largement connus.

Ces appareils comportent généralement une cuve se présentant sous la forme d'un fond à partir duquel s'étend sensiblement dans la direction verticale une paroi latérale. Le fond et la paroi latérale définissent un récipient ouvert à son extrémité supérieure, destiné à accueillir les aliments à cuire.

Ces appareils connus comportent également un couvercle, destiné à être rapporté et verrouillé sur la cuve.

Un joint d'étanchéité, se présentant sous la forme d'un anneau épousant la forme de l'interface entre la cuve et le couvercle, permet de réaliser une enceinte de cuisson sensiblement étanche, c'est-à-dire autorisant la montée en pression.

On connaît en particulier des autocuiseurs à couvercle rentrant, c'est-à-dire dont le couvercle est muni d'un bord annulaire tombant destiné à être inséré à l'intérieur de la cuve, en regard de la face interne de la paroi latérale de ladite cuve.

Pour de tels autocuiseurs, le joint d'étanchéité est interposé entre la paroi latérale et le bord tombant.

Ces autocuiseurs connus comportent également une soupape de régulation de pression, destinée à maintenir au sein de l'enceinte de cuisson une pression de fonctionnement sensiblement constante, ainsi qu'une soupape de sécurité, qui, en cas de défaillance de la soupape de régulation, autorise une décompression de sécurité, pour éviter qu'une surpression dangereuse pour l'utilisateur ne se produise dans l'enceinte.

Cependant, en cas de défaillance à la fois de la soupape de régulation et de la soupape de sécurité, ces autocuiseurs connus ne disposent d'aucun moyen de sécurité supplémentaire autorisant une décompression de l'appareil dans des conditions de sécurité acceptables pour l'utilisateur, et permettant d'éviter une destruction de l'appareil et tous les risques qui y sont associés.

Le document FR-632 268 décrit un appareil conforme au préambule de la revendication 1.

L'objet de l'invention vise en conséquence à proposer un nouvel appareil domestique de cuisson sous pression portant remède aux différents inconvénients énumérés précédemment, et qui procure une excellente sécurité globale d'utilisation.

Un autre objet de l'invention vise à proposer un nouvel appareil domestique de cuisson sous pression de conception particulièrement simple.

Un autre objet de l'invention vise à proposer un nouvel appareil de cuisson sous pression qui autorise des fuites de vapeur calibrées et localisées lorsque la pression à l'intérieur de l'appareil dépasse un niveau prédéterminé de sécurité.

Un autre objet de l'invention vise à proposer un nouvel appareil de cuisson sous pression qui autorise une décompression progressive de l'appareil de cuisson lorsque la pression à l'intérieur dudit appareil dépasse un niveau prédéterminé de sécurité.

Un autre objet de l'invention vise à proposer un joint d'étanchéité pour un appareil de cuisson sous pression permettant d'améliorer la sécurité globale de l'appareil.

Les objets assignés à l'invention sont atteints à l'aide d'un appareil domestique de cuisson d'aliments sous pression comprenant d'une part une cuve pourvue d'une paroi latérale et d'autre part un couvercle destiné à être rapporté et verrouillé sur ladite cuve, lesdits couvercle et paroi latérale définissant, lorsque le couvercle est rapporté et verrouillé sur la cuve, un espace interstitiel annulaire présentant une section transversale initiale de dimension radiale prédéterminée, dite dimension initiale, ledit espace interstitiel étant destiné à accueillir un joint annulaire d'étanchéité conçu pour s'interposer entre la paroi latérale et le couvercle, de façon à réaliser une enceinte de cuisson sensiblement étanche, caractérisé en ce que la cuve, le couvercle et le joint d'étanchéité sont conçus pour que lorsque la pression régnant dans l'enceinte atteint une valeur prédéterminée critique de sécurité, l'espace interstitiel présente, au moins localement, une section transversale critique de dimension radiale prédéterminée, dite dimension critique, supérieure à la dimension initiale, la différence entre la dimension initiale et la dimension critique étant suffisamment importante pour que le contact étanche entre d'une part le joint et d'autre part la paroi latérale et/ou le couvercle soit rompu, engendrant ainsi une décompression de l'enceinte.

Les objets assignés à l'invention sont également atteints à l'aide d'un joint d'étanchéité pour appareil de cuisson conforme à l'invention.

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 montre, selon une vue générale en perspective, une première variante de réalisation d'un appareil de cuisson domestique sous pression conforme à l'invention.
- La figure 2 illustre, selon une vue en coupe longitudinale partielle, l'appareil de cuisson de la figure 1, lorsque l'utilisateur est en train de rapporter le couvercle sur la cuve, ledit appareil étant équipé d'un joint d'étanchéité conforme à une première variante de réalisation de l'invention.
- La figure 3 illustre, selon une vue en coupe longitudinale partielle, l'appareil de cuisson de la figure 2 lorsque le couvercle est verrouillé sur la cuve.
- La figure 4 est identique à la figure 3, à la différence près que le joint d'étanchéité n'est pas représenté.
- La figure 5 illustre, selon une vue en coupe longitudinale partielle, l'appareil représenté aux figures 2 et 3 lorsqu'il se trouve sous pression, en régime normal de fonctionnement.
- La figure 6 illustre, selon une vue en coupe longitudinale partielle, l'appareil de cuisson représenté aux figures 2, 3 et 5 en cours de décompression de sécurité, lorsqu'il est soumis à une pression interne anormalement élevée, et que les moyens traditionnels de sécurité n'ont pas fonctionné.
- La figure 7 est identique à la figure 6, à la différence près que le joint d'étanchéité n'est pas représenté.
- La figure 8 illustre, selon une vue en coupe longitudinale partielle, une deuxième variante de réalisation d'un appareil de cuisson conforme à l'invention lorsque l'utilisateur est en train de rapporter le couvercle sur la cuve, ledit appareil étant équipé d'une deuxième variante de réalisation d'un joint d'étanchéité conforme à l'invention.
- La figure 9 illustre, selon une vue en coupe longitudinale partielle, une troisième variante de réalisation d'un appareil conforme à l'invention, ledit appareil étant équipé d'une troisième variante de joint d'étanchéité conforme à l'invention.
- La figure 10 illustre, selon une vue en coupe transversale, le joint d'étanchéité représenté aux figures 2, 3, 5 et 6.
- La figure 11 illustre, selon une vue en coupe transversale, une quatrième variante d'un joint conforme à l'invention.
- La figure 12 illustre, selon une vue en coupe transversale, une cinquième variante d'un joint d'étanchéité conforme à l'invention.
- La figure 13 illustre, selon une vue en coupe longitudinale partielle, une quatrième variante d'un appareil de cuisson conforme à l'invention lorsque l'utilisateur est en train de rapporter le couvercle sur la cuve.
- La figure 14 illustre, selon une vue en coupe longitudinale partielle, une cinquième variante d'un appareil de cuisson conforme à l'invention, lorsque le couvercle est verrouillé sur la cuve.
- La figure 15 illustre, selon une vue en coupe longitudinale partielle, une sixième variante d'un appareil de cuisson conforme à l'invention, lorsque l'utilisateur est en train de rapporter le couvercle sur la cuve.
- La figure 16 illustre, selon une vue en coupe longitudinale partielle, une septième variante d'un appareil de cuisson conforme à l'invention, lorsque l'appareil se trouve sous pression, en régime normal de fonctionnement.
- La figure 17 illustre, selon une vue en coupe longitudinale partielle, une huitième variante de réalisation d'un appareil de cuisson conforme à l'invention, lorsque l'appareil se trouve sous pression, en régime normal de fonctionnement.
- La figure 18 illustre, selon une vue en coupe longitudinale partielle, une neuvième variante de réalisation d'un appareil de cuisson conforme à l'invention, lorsque l'appareil se trouve sous pression, en régime normal de fonctionnement.
- La figure 19 illustre, selon une vue en coupe longitudinale partielle, une dixième variante de réalisation d'un appareil de cuisson conforme à l'invention, lorsque l'appareil se trouve sous pression, en régime normal de fonctionnement.
- La figure 20 illustre, selon une vue latérale, le joint équipant l'appareil représenté à la figure 18.
- La figure 21, illustre, selon une vue latérale, le joint équipant l'appareil représenté à la figure 19.

L'appareil de cuisson conforme à l'invention est destiné à assurer la cuisson de différents aliments, sous pression, dans un contexte domestique.

De préférence, l'appareil conforme à l'invention est un autocuiseur.

De façon classique, l'appareil de cuisson conforme à l'invention comprend une cuve 1 formant récipient de cuisson et présentant de façon préférentielle sensiblement une symétrie de révolution selon un axe X-X'. Par la suite, l'adjectif « *vertical* » correspondra à la direction de cet axe de symétrie X-X'. La direction radiale sera quant à elle définie relativement à l'axe X-X'.

De façon préférentielle, l'appareil de cuisson domestique conforme à l'invention comprend également d'une part un moyen de régulation de pression (non représenté), du genre soupape, agencé pour maintenir la pression relative régnant dans l'enceinte à une valeur prédéterminée sensiblement constante dite pression de fonctionnement, et d'autre part, une soupape de sécurité (non représentée) destinée à assurer la décompression de l'appareil en cas de défaillance de la soupape de régulation.

De façon préférentielle, l'appareil de cuisson comprend de surcroît un moyen de décompression activable / désactivable (non représenté), agencé pour autoriser, lorsqu'il est activé, une chute de la pression régnant dans l'enceinte. Avantageusement, les fonctions du moyen de décompression pourront être réalisées par le moyen de régulation de pression, qui présente dans ce cas un caractère bi-fonctionnel.

La cuve 1 est de manière classique réalisée à partir d'un matériau métallique tel que l'acier inoxydable, et est pourvue d'une paroi latérale 1A s'étendant globalement dans la direction verticale à partir d'un fond 1B, lequel est par exemple de forme sensiblement circulaire.

Ladite paroi latérale 1A s'étend entre le fond 1B et une ouverture supérieure 1C par laquelle l'utilisateur est en mesure d'introduire les aliments à cuire dans la cuve.

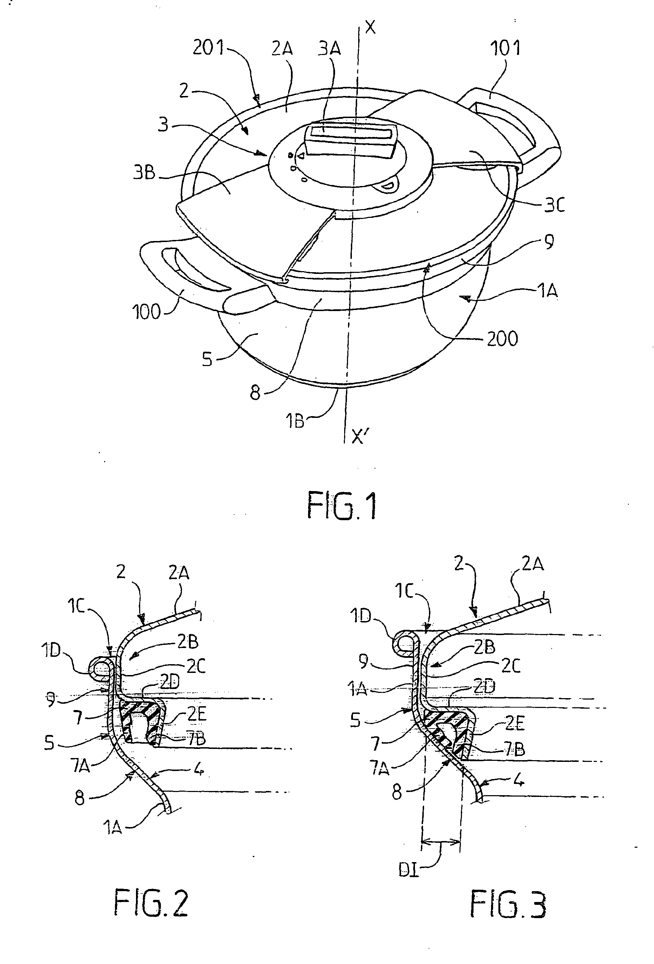

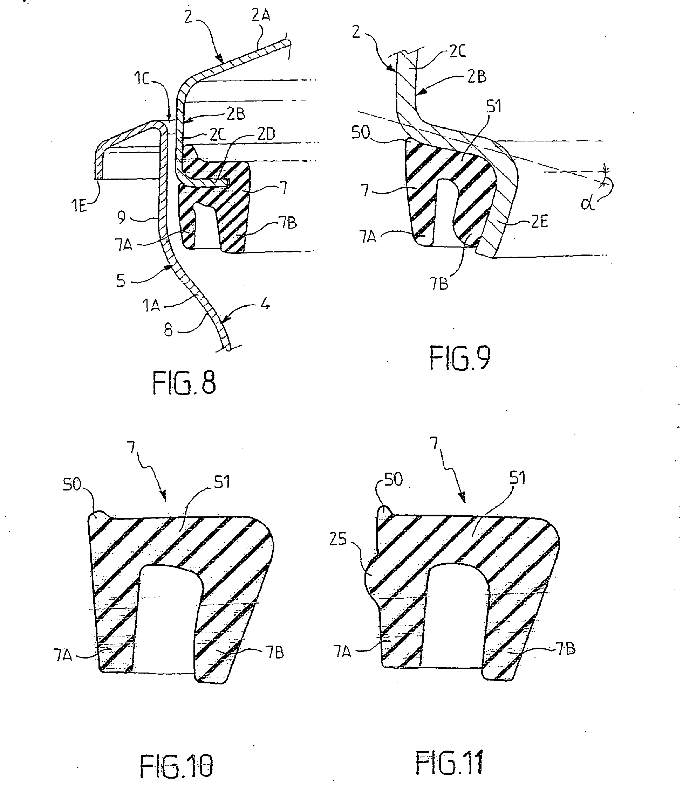

Le bord supérieur de la paroi latérale 1A, définissant l'ouverture supérieure 1C, se présente de préférence sous la forme d'un bord roulé 1D (cf. figures 2 à 5 et 11, 12) ou replié 1E (cas des variantes représentées aux figures 8 et 16 à 20).

La paroi latérale 1A présente une face interne 4, située en regard de l'intérieur de la cuve 1, et une face externe 5 opposée, située en regard de l'extérieur de la cuve 1.

La cuve 1 peut comporter également des organes de préhension, telles que des poignées 100, 101, préférentiellement au nombre de deux, et fixés par exemple sur la cuve 1 de façon diamétralement opposée.

L'appareil comprend également un couvercle 2 destiné à être rapporté et verrouillé sur ladite cuve 1 pour former une enceinte de cuisson sensiblement étanche, c'est-à-dire suffisamment hermétique pour permettre une montée en pression.

Le couvercle 2 est avantageusement de forme générale discoïde, et peut être verrouillé ou déverrouillé sur la cuve 1 grâce à un moyen de verrouillage / déverrouillage 3 du couvercle 2 relativement à la cuve 1.

Dans ce qui suit, on fera plus particulièrement référence à un moyen de verrouillage / déverrouillage à mâchoires 3B, 3C commandé par une poignée. rotative 3A, tel que cela est représenté à la figure 1. Les mâchoires 3B, 3C peuvent ainsi se présenter sous la forme de plaques métalliques montées en translation radiale sur le couvercle 2 et profilées en U à leurs extrémités extérieures, de façon à pouvoir enserrer à la fois, au moins localement, le rebord périphérique de la cuve 1 et le rebord périphérique du couvercle 2, en position de verrouillage. Les mâchoires pourront avantageusement, tel que cela est illustré à la figure 1, être au nombre de deux, et positionnées de manière diamétralement opposée en regard de l'axe de symétrie général X-X' de l'appareil.

Le moyen de verrouillage / déverrouillage 3 du couvercle 2 relativement à la cuve 1 n'est cependant pas limité à un système à mâchoires, et peut par exemple reposer sur un principe de verrouillage à baïonnettes, à segments, à étriers ou selon tout autre moyen bien connu de l'homme du métier, sans pour autant que l'on sorte du cadre de l'invention.

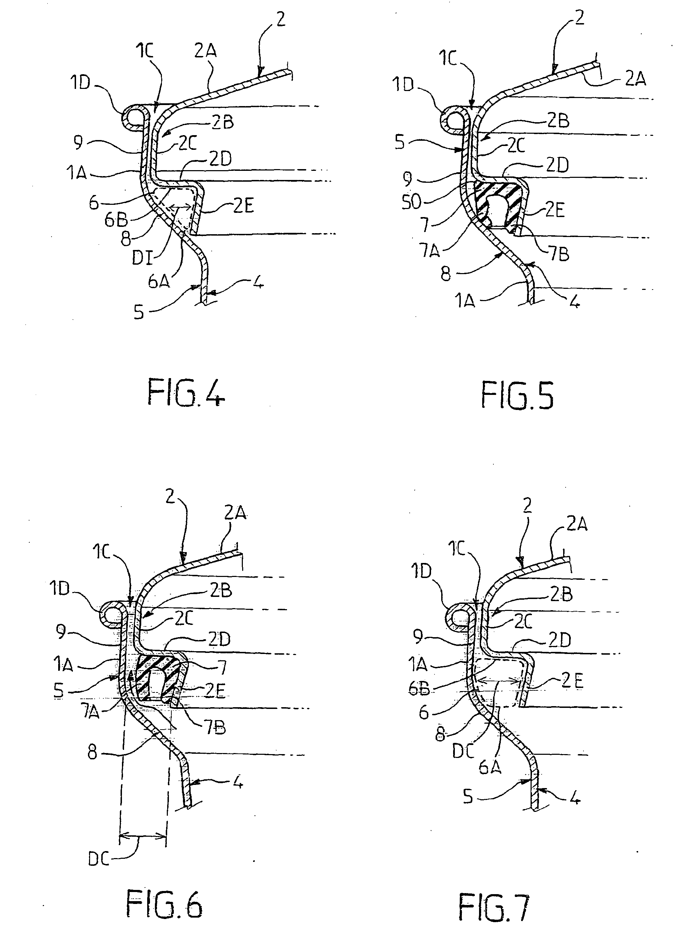

Conformément à l'invention, le couvercle 2 et la paroi latérale 1A de la cuve 1 coopèrent pour définir, lorsque le couvercle 2 est rapporté et verrouillé sur la cuve 1 (tel que cela est représenté notamment aux figures 3 et 4), un espace interstitiel annulaire 6 présentant une section transversale initiale de dimension radiale prédéterminée, dite dimension initiale DI, ledit espace interstitiel 6 étant destiné à accueillir un joint annulaire d'étanchéité 7 conçu pour s'interposer entre la paroi latérale 1A et le couvercle 2, de façon à réaliser une enceinte de cuisson sensiblement étanche.

La dimension radiale DI est une grandeur caractéristique de l'épaisseur, dans la direction radiale, de la section transversale de l'espace interstitiel annulaire 6, perçue depuis le point de vue du joint 7.

Cette grandeur pourra ainsi être l'épaisseur médiane ou moyenne de ladite section transversale, mais être également par exemple, à titre alternatif, l'épaisseur prise à la base 6A de la section transversale, ou encore au sommet 6B de cette dernière (cf. figures 4 et 7).

Le joint annulaire d'étanchéité 7 peut quant à lui être par exemple réalisé à partir d'un matériau élastomère, et peut présenter un profil quelconque, étant entendu qu'il est conçu pour, lorsque le couvercle 2 est rapporté et verrouillé sur la cuve 1, venir en appui étanche à la fois contre la paroi latérale 1A et contre le couvercle 2 de façon à empêcher toute fuite de vapeur entre le couvercle 2 et la cuve 1 vers l'extérieur, et ainsi permettre une montée en pression de l'appareil.

Selon une caractéristique importante de l'invention, la cuve 1, le couvercle 2 et le joint d'étanchéité 7 sont conçus pour que, lorsque la pression régnant dans l'enceinte atteint une valeur prédéterminée critique de sécurité, l'espace interstitiel 6 présente, au moins localement, une section transversale critique de dimension radiale prédéterminée, dite dimension critique DC, supérieure à la dimension initiale DI, la différence entre la dimension initiale DI et la dimension critique DC étant suffisamment importante pour que le contact étanche entre d'une part le joint 7 et d'autre part la paroi latérale 1A et/ou le couvercle 2 soit rompu, engendrant ainsi une décompression de sécurité de l'enceinte, en mettant cette dernière en communication avec l'extérieur.

Le principe de l'invention repose ainsi sur une modification géométrique latérale de l'espace interstitiel 6 formant logement pour le joint 7 lorsqu'une pression critique est atteinte, cette modification géométrique étant suffisante, relativement aux propriétés de souplesse du joint 7, pour générer une décompression de l'enceinte.

En d'autres termes, si l'on se place du point de vue du joint 7, ce dernier percevra, lors du passage de la section transversale initiale à la section transversale critique, un accroissement, dans la direction radiale, de l'espace qu'il doit occuper pour assurer l'étanchéité de l'appareil, cet accroissement devenant trop important, lorsque la valeur prédéterminée critique de pression est atteinte, pour que le joint 7 puisse assurer une fonction d'étanchéité.

Avantageusement, le passage de la section transversale initiale (cf. figure 4) à la section transversale critique (cf. figure 7) est obtenu, au moins en partie, par déplacement du couvercle 2 relativement à la cuve 1.

Ce déplacement du couvercle 2 relativement à la cuve 1 peut être uniquement localisé, et provenir par exemple d'une déformation du couvercle sous l'effet de la pression, en particulier dans les zones du couvercle qui ne sont pas soumises à l'influence directe des mâchoires 3B, 3C.

Ce déplacement peut également constituer une translation globale du couvercle 2 relativement à la cuve 1 sous l'effet de la pression, et en particulier une translation axiale vers l'extérieur du couvercle 2 relativement à la cuve 1, c'est-à-dire un déplacement global du couvercle 2 dans la direction verticale X-X', vers le haut.

Avantageusement, le passage de la section transversale initiale à la section transversale critique peut également être obtenu, au moins en partie, par déformation radiale de la cuve 1. Par exemple, sous l'effet de la pression, l'ouverture supérieure 1C, lorsqu'elle est de section circulaire, peut avoir tendance à s'ovaliser sous l'action de la pression, c'est-à-dire s'étirer dans la direction radiale dans des zones localisées 200, 201 diamétralement opposées.

En particulier, dans le cas de l'appareil de cuisson conforme à l'invention représenté à la figure 1, les zones localisées 200, 201 de déformation radiale correspondront aux zones qui ne sont pas soumises à l'action directe des mâchoires 3B, 3C, et sont donc par conséquent susceptibles de se déformer plus facilement sous l'effet de la pression.

En définitive, la cuve 1 et le couvercle 2 sont préférentiellement conçus en termes de dimensionnement et de capacité de déformation pour que, lorsque la pression critique prédéterminée est atteinte, le couvercle 2 et la cuve 1 s'éloignent, au moins localement, l'un de l'autre, par déformation et/ou par translation globale.

Cet éloignement va provoquer l'agrandissement de l'épaisseur DI de l'espace interstitiel 6 jusqu'à un point où le joint de sécurité 7 n'est plus en mesure, grâce notamment à des caractéristiques de souplesse prédéterminées, d'épouser à la fois la paroi latérale 1A et le couvercle 2 (cf. figure 6).

Le joint 7 joue ainsi préférentiellement un rôle passif dans l'établissement de la fuite de sécurité, laquelle est ici avantageusement obtenue par un éloignement radial relatif de la cuve et du couvercle, éloignement combiné avec un dimensionnement et une souplesse de joint adaptés.

En d'autres termes, le joint 7 reste avantageusement en permanence immobile relativement au couvercle, même lorsqu'une surpression accidentelle se produit. C'est donc bien l'écartement relatif de la paroi latérale de la cuve et du couvercle qui produit l'effet de fuite recherché, et non un déplacement positif (déformation ou extrusion) du joint lui-même.

Le passage de la section transversale initiale à la section transversale critique peut cependant, de façon alternative, être obtenu, au moins en partie, par déplacement du joint 7 relativement au couvercle 2.

En particulier, il est envisageable que le joint soit capable de se déplacer dans la direction axiale, vers le haut, au moins localement. Ce déplacement peut s'effectuer par translation globale, ou par déformation du joint. Ainsi, dans ce cas, c'est le déplacement ou la déformation du joint 7 lui-même qui va placer ledit joint 7, lorsque la pression atteint la valeur critique prédéterminée de sécurité, dans une configuration où il dispose d'un espace libre plus important dans la direction radiale, ledit espace libre, défini entre la paroi latérale 1A et le couvercle 2, étant de dimension trop importante dans la direction radiale relativement à la dimension et à la souplesse du joint pour que ledit joint 7 puisse faire office d'élément d'étanchéité, provoquant ainsi une fuite de décompression.

Le joint 7 pourra être de tout type classique connu de l'homme du métier, à la condition que ses propriétés élastiques dans la direction radiale lui autorisent d'épouser, lorsque le couvercle 2 est verrouillé sur la cuve 1 (cf. figure 3) ou lorsque l'autocuiseur est maintenu à sa pression de fonctionnement (cf. figure 5), à la fois la paroi latérale 1A et le couvercle 2, tout en étant susceptible, au delà d'une pression prédéterminée critique de sécurité, de ne pas pouvoir accommoder l'augmentation de l'épaisseur DI de l'espace interstitiel 6, de façon à provoquer une fuite de sécurité.

Le joint 7 est donc de section et de souplesse suffisamment faible pour ne plus être en mesure d'assurer l'étanchéité de l'enceinte lorsque la dimension critique DC de l'espace interstitiel 6 est atteinte.

Le joint 7 pourra en particulier présenter une section de forme sensiblement carrée, rectangulaire ou arrondie, et par exemple pleine et massive.

Avantageusement, tel que cela est représenté aux figures, le joint d'étanchéité 7 est un joint à double lèvres.

De manière préférentielle, le joint annulaire d'étanchéité 7 présente ainsi une section transversale en forme de U, les bras du U étant dirigés vers le bas lorsque le joint est monté en position de fonctionnement dans l'appareil, les bras du U formant chacun respectivement une première lèvre 7A et une deuxième lèvre 7B, tandis que l'âme du U forme le talon 51 du joint 7.

De façon préférentielle, la première lèvre 7A est destinée à assurer un contact étanche avec la paroi latérale 1A, tandis que la deuxième lèvre 7B est destinée à assurer un contact étanche avec le couvercle 2.

Les contacts étanches des première et deuxième lèvres 7A, 7B sont bien sûr obtenus lorsque le couvercle 2 est rapporté et verrouillé sur la cuve 1, tel que cela est notamment représenté aux figures 3 et 5, et lorsque la pression à l'intérieur de l'enceinte n'excède pas la pression critique de sécurité.

De façon préférentielle, le joint 7 est conçu pour que lorsque la pression de sécurité est atteinte ou dépassée au sein de l'autocuiseur, la première lèvre 7A se sépare de la paroi latérale 1A suffisamment pour autoriser une décompression de l'enceinte.

Ce mode de fonctionnement est particulièrement adapté dans le cas, qui correspond aux variantes représentées aux figures, où le joint d'étanchéité 7 est monté solidaire du couvercle 2, par exemple par cerclage élastique du couvercle 2 par le joint 7.

Dans ce cas, la deuxième lèvre 7B forme une lèvre fixe, qui est plaquée en permanence contre le couvercle 2, tandis que la première lèvre 7A forme une lèvre libre, qui peut plus ou moins défléchir pour assurer l'étanchéité.

Il est cependant tout à fait envisageable que le joint d'étanchéité 7 soit monté solidaire de la cuve 1. Dans ce cas, il est avantageux que ce soit la deuxième lèvre 7B qui soit conçue pour rompre le contact avec le couvercle 2 au-delà de la pression critique de sécurité, la première lèvre 7A restant quant à elle de préférence en contact permanent avec la paroi latérale 1A.

On va maintenant décrire plus en détails les différentes variantes de réalisation de l'invention représentées aux figures 1 à 21. Ces différentes variantes mettent toutes en oeuvre un joint d'étanchéité 7 à double lèvres du type de celui qui a été décrit de manière générale ci-avant.

Dans une première variante de réalisation, représentée aux figures 2 à 7, la paroi latérale 1A de la cuve 1 s'étend, dans la zone de définition 8 de l'espace interstitiel 6, de façon sensiblement divergente du fond 1B vers l'ouverture supérieure 1C.

En d'autres termes, de façon préférentielle, la paroi 1A s'évase vers l'extérieur au niveau de l'espace interstitiel 6.

A cette fin, la paroi latérale 1A peut comprendre, au niveau de la zone 8, une portion tronconique, laquelle est prolongée par une portion cylindrique verticale droite 9, dans la direction de l'ouverture 1C.

La portion de la paroi latérale 1A située entre le fond 1B et la zone 8 peut quant à elle être de forme quelconque, et par exemple sensiblement cylindrique droite et verticale, ou encore sensiblement tronconique.

Dans cette première variante de réalisation, le couvercle 2 comprend un plafond 2A, de préférence légèrement galbé et convexe.

Le couvercle 2 comprend également un rebord latéral tombant 2B, s'étendant à partir de la périphérie du plafond 2A, vers le bas, en considération de la direction verticale X-X'.

Le rebord latéral 2B est destiné à être inséré à l'intérieur de la cuve 1 lorsque le couvercle 2 est rapporté et verrouillé sur cette dernière, ce qui signifie que le rebord latéral 2B est sensiblement entouré par la face interne 4 de la paroi latérale 1A lorsque le couvercle 2 est mis en place dans la cuve 1.

Le couvercle 2 peut donc être qualifié de couvercle rentrant dans la cuve.

L'espace interstitiel annulaire 6 s'étend radialement entre la paroi latérale 1A et le rebord latéral 2B.

De façon avantageuse, le rebord latéral 2B du couvercle 2 s'étend à partir du bord périphérique du plafond 2A selon un premier tronçon sensiblement vertical 2C, lui-même prolongé d'un deuxième tronçon sensiblement horizontal 2D, s'étendant radialement de façon rentrante vers l'intérieur du couvercle 2 et de la cuve 1, de façon sensiblement parallèle au fond 1B.

Le deuxième tronçon 2D est enfin lui-même prolongé par un troisième tronçon 2E s'étendant sensiblement vers le bas et vers l'extérieur de l'appareil, c'est-à-dire selon une direction légèrement oblique par rapport à la direction verticale X-X'.

Le rebord latéral 2B du couvercle 2 de l'appareil de cuisson correspondant à la variante de réalisation représentée aux figures 2 à 7 présente ainsi sensiblement une forme en escalier, avec une première contremarche 2C suivie d'une marche 2D, suivie elle-même d'une deuxième contremarche 2E.

L'espace interstitiel annulaire 6 est donc délimité par d'une part la face interne 4 de la zone 8 de la paroi latérale 1A, et d'autre part les deuxième et troisième tronçons 2D, 2E du rebord latéral 2B du couvercle 2 (cf. figure 4).

L'espace interstitiel 6 forme ainsi un logement pour le joint d'étanchéité 7, lequel vient d'une part se plaquer contre la face interne 4 de la paroi latérale 1A, dans la zone 8 de cette dernière, et d'autre part contre le couvercle 2, c'est-à-dire contre les deuxième et troisième tronçons 2D, 2E, interdisant ainsi toute fuite de vapeur vers l'extérieur.

Plus précisément, le joint 7 est monté à cerclage élastique sur le troisième tronçon 2E, de telle sorte que la deuxième lèvre 7B est plaquée contre la face externe dudit deuxième tronçon, tandis que le talon 51 du joint reliant les première et deuxième lèvres 7A, 7B vient s'appuyer contre le deuxième tronçon 2D. La première lèvre 7A est quant à elle libre, et est destinée à venir se plaquer contre la face interne 4 de la paroi latérale 1A au niveau de la zone tronconique 8.

Dans un deuxième mode de réalisation, représenté à la figure 8, la cuve 1 et le couvercle 2 sont similaires à ceux de la première variante de réalisation des figures 2 à 7, à l'exception des caractéristiques suivantes :
- le bord supérieur de la cuve 1E est un bord plié et non pas roulé;
- le rebord latéral 2B du couvercle 2 comprend uniquement deux tronçons, à savoir un premier tronçon vertical 2C similaire au premier tronçon de la variante représentée aux figures 2 à 7, ainsi q'un deuxième tronçon horizontal rentrant 2D, sensiblement similaire au deuxième tronçon de la variante représentée aux figures 2 à 7. En revanche, le rebord latéral 2B ne comprend pas de troisième tronçon 2E prolongeant le deuxième tronçon 2D.

Cette deuxième variante diffère également par la conformation du joint d'étanchéité 7. Ce dernier, s'il présente, à l'instar du joint de la première variante, une section transversale sensiblement en forme de U, présente également cependant une entaille radiale de solidarisation du joint 7 sur le couvercle 2, ladite entaille étant conformée pour accueillir de façon ajustée le deuxième tronçon horizontal 2D.

Ainsi, dans cette variante de réalisation, l'espace interstitiel destiné à accueillir le joint d'étanchéité 7 est physiquement délimité uniquement par le tronçon horizontal 2D et la face interne 4 de la paroi latérale 1A.

Dans une troisième variante de réalisation, représentée à la figure 9, la cuve 1 et le joint 7 sont similaires à ceux utilisés dans le cadre de la variante représentée aux figures 2 à 7.

En revanche, le couvercle 2 diffère du couvercle mis en oeuvre dans ladite variante des figures 2 à 7 par le fait que son deuxième tronçon 2D s'étend en oblique relativement à la direction horizontale, par exemple d'un angle α supérieur ou égal à 15°.

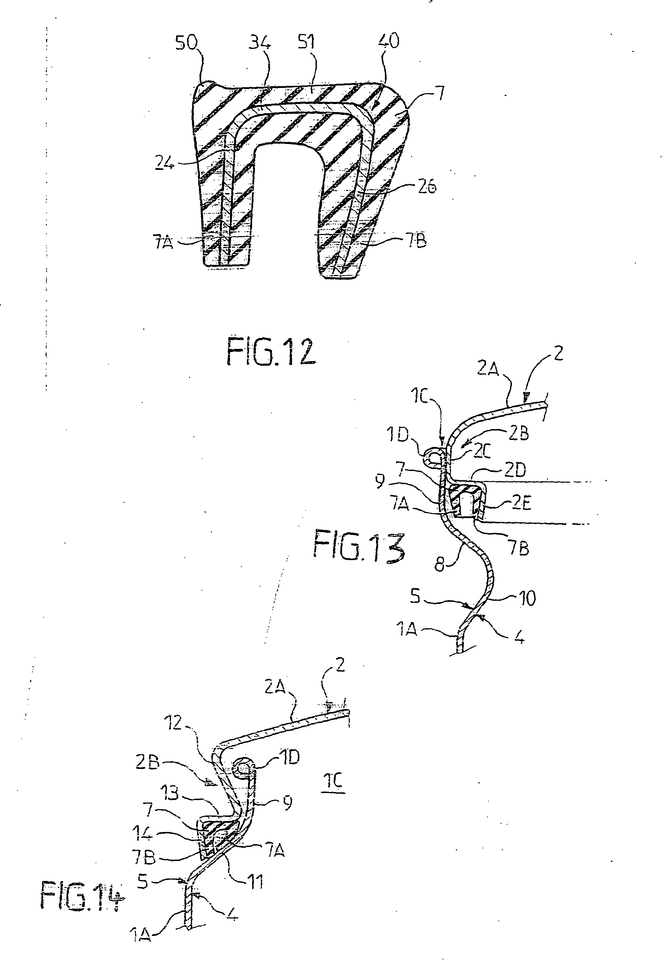

Dans une quatrième variante de réalisation de l'appareil de cuisson conforme à l'invention, représentée à la figure 13, l'ensemble des éléments de l'appareil est identique à celui de la variante de réalisation représentée aux figures 2 à 7, à l'exception près que la paroi latérale 1A de la cuve 1 présente également une zone 10 sensiblement convergente vers l'intérieur de la cuve, dans le sens du fond de cuve 1B vers l'ouverture 1C. La zone convergente 10, qui se présente par exemple sous la forme d'une portion tronconique, se trouve par exemple située juste en dessous de la zone divergente 8.

Dans le cas de la cinquième variante de réalisation représentée à la figure 14, le couvercle 2 n'est pas un couvercle à bord rentrant, c'est-à-dire que son rebord latéral 2B est conçu au contraire pour entourer la face extérieure 5 de la paroi latérale 1A de la cuve 1.

Le rebord latéral 2B du couvercle 2 s'étend ainsi à partir du bord périphérique du plafond 2A selon un premier tronçon sensiblement vertical 12, lui-même prolongé d'un deuxième tronçon sensiblement horizontal 13 s'étendant radialement de façon sortante vers l'extérieur du couvercle 2 et de la cuve 1, de façon sensiblement parallèle au fond 1B.

Le deuxième tronçon 13 est enfin lui-même prolongé par un troisième tronçon 14 s'étendant sensiblement vers le bas et vers l'extérieur de l'appareil, c'est-à-dire selon une direction légèrement oblique par rapport à la direction verticale X-X'.

II est également envisageable que le premier tronçon 12 soit orienté en oblique relativement à la verticale X-X', de façon divergente dans le sens du fond de cuve 1B vers l'ouverture 1C.

La paroi latérale 1A s'étend quant à elle, dans la zone 11 de définition de l'espace interstitiel, de façon sensiblement convergente du fond 1B vers l'ouverture supérieure 1C.

De cette façon, le joint d'étanchéité 7 est interposé entre d'une part ladite zone convergente 11, qui présente de préférence une forme sensiblement tronconique, et d'autre part les deuxième et troisième tronçons 13, 14.

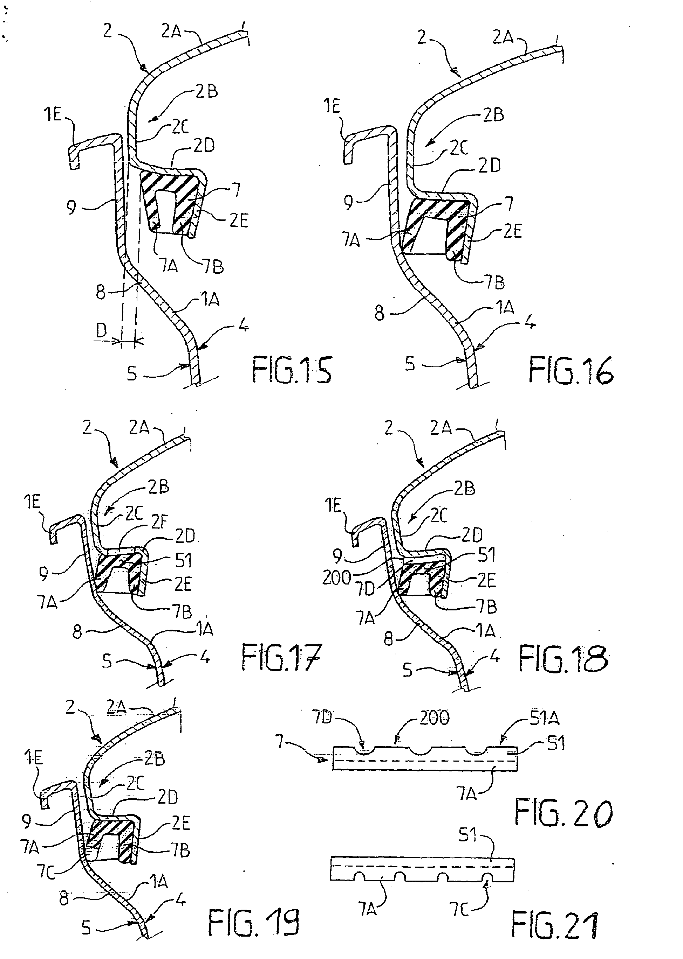

Dans une sixième variante de réalisation, représentée à la figure 15, l'ensemble des éléments de l'appareil est identique à celui de la variante de réalisation représentée aux figures 2 à 7, à l'exception près que le joint 7 est dimensionné relativement au deuxième tronçon horizontal 2D du rebord latéral 2B du couvercle de façon à ne pas déborder radialement vers l'extérieur du couvercle relativement au premier tronçon 2C.

Le joint 7 est ainsi positionné radialement en retrait d'une distance D relativement au premier tronçon 2C, ladite distance D étant suffisante pour faciliter l'insertion du couvercle 2 dans la cuve 1, en évitant tout contact adhérent joint / cuve avant que le couvercle 2 n'ait atteint sa position finale d'insertion, et en privilégiant un contact métal / métal, donc particulièrement glissant, entre la paroi latérale 1A et le premier tronçon 2C.

Dans une septième variante de réalisation, représentée à la figure 16, la cuve 1, le couvercle 2 et le joint 7 sont conçus de façon à ce que lorsque l'appareil se trouve sous pression, en régime normal de fonctionnement, la première lèvre 7A vienne en contact étanche avec le tronçon vertical terminal 9 de la paroi latérale 1A. A cette fin, la première lèvre 7A est conçue pour pouvoir défléchir vers l'extérieur du couvercle 2, dans la direction radiale, sous l'effet de la pression régnant dans l'enceinte.

Lorsque la pression régnant dans l'enceinte atteint la valeur prédéterminée critique de sécurité, la cuve 1 s'ovalise, ce qui conduit à un éloignement dudit tronçon vertical terminal 9 du joint 7A, engendrant une fuite de décompression.

Dans une huitième variante de réalisation, représentée à la figure 17, l'ensemble des éléments de l'appareil est identique à celui de la variante de réalisation représentée aux figures 2 à 7, à l'exception près que le deuxième tronçon horizontal 2D est percé d'au moins une fenêtre d'extrusion 2F, au travers de laquelle le joint 7 est destiné à s'extruder verticalement par son talon 51 lorsque la pression atteint ou dépasse la valeur critique prédéterminée de sécurité.

Ainsi, lorsque la valeur critique de pression est atteinte, le joint 7 va subir, au moins localement, une translation axiale vers le haut en s'extrudant à travers la fenêtre 2F. Cette translation va déplacer verticalement la première lèvre 7A, vers une zone de dimension radiale plus large, du fait par exemple de la pente que présente la paroi latérale 1A dans la zone 8. Dans cette variante, c'est donc en partie le joint 7 lui-même qui, en se déplaçant, se positionne dans un espace interstitiel plus large radialement que l'espace interstitiel dans lequel il se trouvait avant son extrusion.

Ce fluage du joint permet d'obtenir une fuite de vapeur présentant un caractère particulièrement progressif, ce qui contribue à la sécurité de la décompression.

Dans une neuvième variante de réalisation, représentée aux figures 18 et 20, l'appareil de cuisson, qui est par ailleurs identique à celui de la variante de réalisation représentée aux figures 2 à 7, comporte avantageusement un moyen d'interface 200 du joint 7 relativement au couvercle 2, ledit moyen d'interface 200 étant agencé pour évoluer entre une première configuration (représentée à la figure 18), dans laquelle il occupe un volume fonctionnel prédéterminé, lorsque la pression dans l'enceinte est en deçà de la valeur prédéterminée critique, et une deuxième configuration (non représentée), dans laquelle il occupe un volume restreint lorsque la pression dans l'enceinte atteint ou dépasse la valeur prédéterminée critique.

De manière préférentielle, tel que cela est représenté aux figures 18 et 20, le moyen d'interface 200 est formé par le talon 51 du joint 7, ledit talon comprenant au moins une encoche supérieure 7D. Cette encoche 7D va conférer au joint 7 la capacité de s'écraser plus facilement contre le deuxième tronçon 2D en cas de surpression.

En d'autres termes, lorsque la pression atteint ou dépasse la valeur prédéterminée critique à l'intérieur de l'enceinte, le joint 7 va, au niveau de ladite au moins une encoche 7D, s'écraser dans la direction verticale contre le deuxième tronçon 2D, ce qui va induire une translation associée de la lèvre 7A dans une configuration où elle n'est plus en mesure d'assurer un contact radial étanche avec la paroi latérale 1A.

A titre alternatif, le moyen d'interface 200 peut être constitué par une couche de matière élastique recouvrant la face supérieure 51A du talon 51. Les propriétés d'élasticité du matériau formant ladite couche sont choisies de telle sorte que tant que la pression régnant dans l'enceinte est inférieure à la valeur prédéterminée critique, ladite couche maintient une première distance prédéterminée entre le talon 51 et le deuxième tronçon 2D, et, lorsque la pression atteint ou dépasse ladite valeur prédéterminée critique, la couche s'écrase, de façon à diminuer la distance séparant le talon 51 du deuxième tronçon 2D.

La couche de matériau élastique recouvrant le talon 51 fait ainsi office de ressort de compression, dont la force de rappel est déterminée en fonction de la valeur prédéterminée critique de pression.

Dans une dixième variante de réalisation, représentée aux figures 19 et 21, l'appareil de cuisson est identique à celui représenté aux figures 2 à 7, à l'exception du fait que la première lèvre 7A comporte au moins une première encoche inférieure 7C, ménagée à l'extrémité inférieure de la lèvre 7A, à l'opposé du talon 51. Ladite encoche 7C permet localement de provoquer de façon précoce et progressive une fuite de sécurité lorsque la pression dans l'enceinte atteint la valeur prédéterminée critique de sécurité. La rupture d'étanchéité va en effet se produire plus facilement dans les endroits où la quantité de matière est moindre, tel que cela est le cas au niveau des encoches inférieures 7C.

On va maintenant décrire d'autres modes de réalisation du joint d'étanchéité 7, étant entendu que ledit joint peut constituer une invention indépendante en tant que tel.

De façon avantageuse, au moins un secteur angulaire du joint d'étanchéité 7 présente, dans la direction radiale, une raideur supérieure à celle du reste du joint, en dehors desdits secteurs angulaires.

En d'autres termes, l'invention concerne également un joint d'étanchéité 7 dont la souplesse dans la direction radiale est variable et qui présente en particulier des zones localisées dont la raideur dans la direction radiale est accrue.

Cette disposition technique permet de favoriser la perte de contact du joint 7 avec la paroi latérale 1A et/ou le couvercle 2 en des endroits prédéterminés, correspondant aux zones de raideur majorées, lorsque la pression à l'intérieur de l'enceinte atteint la valeur prédéterminée critique.

En d'autres termes, le joint d'étanchéité 7 présente localement des zones dont la souplesse n'est pas assez importante pour accommoder la différence entre la dimension initiale DI et la dimension critique DC de l'espace interstitiel 6. Des fuites calibrées de décompression se produiront ainsi de façon privilégiée dans les zones de raideur majorée, lesquelles seront de préférence distribuées de façon régulière sur le joint 7 en vue de favoriser des fuites dans les zones du couvercle qui s'y prêtent le mieux, à savoir les zones 22, 23 les plus éloignées des moyens de verrouillage 3B, 3C et qui seront donc sujettes à déformation maximale en cas de surpression critique.

Cette répartition régulière des zones de raideur supérieure permet ainsi d'éviter d'indexer la rotation du joint 7 sur celle du couvercle 2.

Avantageusement, dans le cas où ledit joint 7 est un joint à double lèvres tel que celui décrit précédemment ici, ledit au moins un secteur angulaire est pourvu d'au moins un premier moyen de raidissement de la première lèvre 7A, en vue de limiter la flexibilité de ladite première lèvre 7A.

Avantageusement, la première lèvre 7A est ainsi réalisée avec un premier matériau dans ledit au moins un secteur angulaire et avec un deuxième matériau en dehors dudit secteur angulaire, le premier matériau présentant une raideur radiale supérieure à celle du deuxième matériau, le premier matériau formant ainsi premier moyen de raidissement.

Ainsi, la caractéristique recherchée est obtenue dans ce cas grâce à la variation des propriétés des matériaux à partir desquels est réalisé le joint 7.

Dans une autre variante de réalisation, le premier moyen de raidissement comprend une armure 24 noyée au sein de la première lèvre 7A, ladite armure étant de préférence réalisée en un matériau de raideur supérieure au matériau de réalisation de la lèvre 7A, en vue d'armer et de rigidifier ladite lèvre 7A.

Dans une autre variante de réalisation, le premier moyen de raidissement comprend une surépaisseur 25 de la première lèvre 7A, ladite surépaisseur 25 étant localisée sur la lèvre 7A de façon à défavoriser la flexibilité de la première lèvre 7A.

Avantageusement, à titre alternatif ou complémentaire du premier moyen de raidissement, ledit au moins un secteur angulaire est pourvu d'au moins un deuxième moyen de raidissement de la deuxième lèvre 7B en vue de limiter la flexibilité de ladite deuxième lèvre.

Le deuxième moyen de raidissement de ladite deuxième lèvre 7B pourra être de nature similaire au premier moyen de raidissement.

En particulier, la deuxième lèvre 7B pourra être réalisée avec un troisième matériau dans ledit au moins un secteur angulaire, et avec un quatrième matériau en dehors dudit secteur angulaire, le troisième matériau présentant une raideur radiale supérieure à celle du quatrième matériau, le troisième matériau formant ainsi le deuxième moyen de raidissement.

Avantageusement, le deuxième moyen de raidissement pourra comprendre une armure 26 noyée au sein de la deuxième lèvre 7B.

Selon une autre variante de réalisation, le deuxième moyen de raidissement pourra également comprendre une surépaisseur de la deuxième lèvre (non représentée).

Dans un mode préférentiel de réalisation, lesdits au moins un premier et deuxième moyens de raidissement sont formés par au moins un moyen de raidissement unique, reliant mécaniquement la première et la deuxième lèvres 7A, 7B, de façon à limiter la flexibilité naturelle de ces dernières.

De façon complémentaire ou alternative, le moyen de raidissement unique peut par exemple comprendre une armure 40 en forme de U, de profil similaire à celui de la section transversale du joint 7, ladite armure 40 étant intégrée dans une section transversale du joint 7 (cf. figure 12).

L'armure comprend ainsi deux bras 24, 26 reliés entre eux par une âme 34.

En définitive, le joint 7 conforme à l'invention présente de préférence une capacité variable de déformation dans la direction radiale, capacité qui lui permet d'autoriser, de façon précoce ou exclusive, une fuite de décompression localisée au niveau des zones les plus raides du joint dans la direction radiale. Une telle mesure technique est cependant tout à fait optionnelle, un joint présentant une continuité et une homogénéité de ses propriétés mécaniques pouvant tout à fait être mis en oeuvre dans le cadre de l'invention, comme on l'a vu précédemment.

Avantageusement, le joint 7 conforme à l'invention présente, tel que cela est représenté notamment aux figures 10, 11 et 12, une excroissance annulaire de positionnement 50, destinée à coopérer avec le bord latéral 2B du couvercle 2, de façon à maintenir le joint 7 en position dans son logement, lorsque la première lèvre 7A travaille radialement en flexion. L'excroissance 50 est de préférence située dans le prolongement de la première lèvre 7A, et fait saillie du talon du joint, à la périphérie de ce dernier.

L'excroissance 50 est ainsi destinée à coopérer, dans le cas par exemple de la variante représentée aux figures 2 à 7, avec les premier et deuxième tronçons 2C, 2D, sensiblement au niveau de la jonction desdits tronçons 2C, 2D.

Avantageusement, la première lèvre 7A s'étend sensiblement en oblique relativement à la direction verticale X-X', de façon rentrante vers l'intérieur du joint, de façon à favoriser le bon emplacement du joint dans la cuve, c'est-à-dire favoriser le pliage de la première lèvre 7A vers la deuxième lèvre 7B lorsque le couvercle 2 est verrouillé relativement à la cuve 1 (cf. figure 3).

Avantageusement, la deuxième lèvre 7B s'étend également en oblique relativement à la direction verticale, de façon rentrante vers l'intérieur du joint, selon une angulation congruente avec l'angulation du troisième tronçon 2E. Cette disposition permet d'améliorer la tenue du joint relativement au couvercle.

Ainsi, de façon préférentielle, les directions dans lesquelles s'étendent les lèvres 7A, 7B sont sécantes.

On va maintenant décrire le fonctionnement de l'appareil de cuisson conforme à l'invention, en se basant plus particulièrement sur la variante décrite aux figures 2 à 7.

Tout d'abord, l'utilisateur insère le couvercle 2 dans la cuve 1. La coopération du premier tronçon vertical 2C du rebord latéral 2B du couvercle avec la face interne 4 de la paroi latérale 1A permet un autoguidage du couvercle 2 relativement à la cuve 1.

De surcroît, lors de l'insertion, le contact entre le couvercle 2 et la cuve 1 se fait uniquement entre le bord latéral 2B et la paroi latérale 1A, le joint 7 n'adhérant pas à la cuve, ce qui facilite l'introduction du couvercle.

Une fois le couvercle inséré, seule la première lèvre 7A se plie. Lorsque l'on procède au verrouillage du couvercle sur la cuve (cf. figure 3) le joint 7 est écrasé contre la paroi latérale 1A, et travaille en compression.

L'appareil se trouve alors en position de verrouillage étanche. L'utilisateur peut procéder par conséquent à la montée en pression de l'appareil, en le soumettant à une source de chauffe.

Lorsque l'appareil de cuisson atteint son niveau de pression de régulation, le couvercle, sous l'effet de la pression régnant à l'intérieur de la cuve, se déforme et s'éloigne de la paroi latérale (cf. figure 5).

L'étanchéité est cependant maintenue grâce à la flexibilité de la première lèvre 7A, qui absorbe les déformations du couvercle 2 et conserve le contact avec la paroi latérale 1A. Le joint travaille ainsi de manière radiale.

Dans le cas où la pression régnant dans l'enceinte atteint une valeur critique anormale prédéterminée, la déformation du couvercle 2 va s'accroître, ce qui va conduire le couvercle 2 à s'éloigner encore plus de la paroi latérale 1A, d'autant que la cuve 1, peut également, sous l'effet de cette surpression, s'ovaliser.

La première lèvre 7A perd alors le contact avec la paroi, latérale 1A et assure une « *fuite au joint* » douce et progressive, qui forme un moyen supplémentaire de sécurité de l'appareil de cuisson, venant s'ajouter aux diverses soupapes prévues par ailleurs classiquement à cet effet.

## Revendications

1. Appareil domestique de cuisson d'aliments sous pression comprenant d'une part une cuve (1) pourvue d'une paroi latérale (1A) et d'autre part un couvercle (2) destiné à être rapporté et verrouillé sur ladite cuve (1), lesdits couvercle (2) et paroi latérale (1A) définissant, lorsque le couvercle (2) est rapporté et verrouillé sur la cuve, un espace interstitiel annulaire (6) présentant une section transversale initiale de dimension radiale prédéterminée, dite dimension initiale (DI), ledit espace interstitiel (6) étant destiné à accueillir un joint annulaire d'étanchéité (7) conçu pour s'interposer entre la paroi latérale (1A) et le couvercle (2), de façon à réaliser une enceinte de cuisson sensiblement étanche, **caractérisé en ce que** la cuve (1), le couvercle (2) et le joint d'étanchéité (7) sont conçus pour que lorsque la pression régnant dans l'enceinte atteint une valeur prédéterminée critique de sécurité, l'espace interstitiel (6) présente, au moins localement, une section transversale critique de dimension radiale prédéterminée, dite dimension critique (DC), supérieure à la dimension initiale (DI), la différence entre la dimension initiale (DI) et la dimension critique (DC) étant suffisamment importante pour que le contact étanche entre d'une part le joint (7) et d'autre part la paroi latérale (1A) et/ou le couvercle (2) soit rompu, engendrant ainsi une décompression de l'enceinte.

2. Appareil selon la revendication 1 **caractérisé en ce que** le passage de la section transversale initiale à la section transversale critique est obtenu, au moins en partie, par déplacement du couvercle (2) relativement à la cuve (1).

3. Appareil selon la revendication 2 **caractérisé en ce que** le passage de la section transversale initiale à la section transversale critique est obtenu, au moins en partie, par translation axiale du couvercle (2) relativement à la cuve (1).

4. Appareil selon l'une des revendications 1 à 3 **caractérisé en ce que** le passage de la section transversale initiale à la section transversale critique est obtenu, au moins en partie, par déformation radiale de la cuve (1).

5. Appareil selon l'une des revendications 1 à 4 **caractérisé en ce que** la paroi latérale 1A s'étend verticalement entre un fond (1B) et une ouverture supérieure (1C), ladite paroi latérale (1A) s'étendant de façon sensiblement divergente du fond vers l'ouverture supérieure (1C), dans la zone de définition de l'espace interstitiel, le couvercle (2) comprenant un rebord latéral (2B) destiné à être inséré à l'intérieur de la cuve (1) lorsque le couvercle (2) est rapporté et verrouillé sur cette dernière, l'espace interstitiel annulaire (6) s'étendant radialement entre la paroi latérale (1A) et le rebord latéral (2B).

6. Appareil selon l'une des revendications 1 à 5 **caractérisé en ce que** le joint d'étanchéité (7) présente une section transversale en forme de U, les bras du U formant chacun respectivement une première et une deuxième lèvres (7A, 7B) tandis que l'âme du U forme le talon (51) du joint (7), la première lèvre (7A) étant destinée à assurer un contact étanche avec la paroi latérale (1A), la deuxième lèvre (7B) étant destinée à assurer un contact étanche avec le couvercle (2), lorsque ce dernier est rapporté et verrouillé sur la cuve (1).

7. Appareil selon l'une des revendications 1 à 6 **caractérisé en ce qu'**au moins un secteur angulaire (15, 16, 17, 18, 19, 20, 21) du joint d'étanchéité (7) présente, dans la direction radiale, une raideur supérieure à celle du reste du joint (7).

8. Appareil selon les revendications 6 et 7 **caractérisé en ce que** ledit au moins un secteur angulaire (15, 16, 17, 18, 19, 20, 21) est pourvu d'au moins un premier moyen de raidissement (24, 25) de la première lèvre (7A), en vue de limiter sa flexibilité.

9. Appareil selon la revendication 8 **caractérisé en ce que** le premier moyen de raidissement comprend une surépaisseur (25) de la première lèvre (7A).

10. Appareil selon l'une des revendications 8 ou 9 **caractérisé en ce que** ledit au moins un secteur angulaire (15, 16, 17, 18, 19, 20, 21) du joint (7) est pourvu d'au moins un deuxième moyen de raidissement (26) de la deuxième lèvre (7A), en vue de limiter sa flexibilité.

11. Appareil selon la revendication 10 **caractérisé en ce que** lesdits au moins un premier et deuxième moyens de raidissement sont formés par au moins un moyen de raidissement unique, reliant mécaniquement la première et la deuxième lèvre (7A, 7B).

12. Appareil selon la revendication 11 **caractérisé en ce que** le moyen de raidissement unique comprend une armure (40) en forme de U intégrée dans une section transversale du joint.

13. Appareil selon l'une des revendications 1 à 12 **caractérisé en ce que** le passage de la section transversale initiale à la section transversale critique est obtenu, au moins en partie, par déplacement du joint (7) relativement au couvercle (2).

14. Appareil selon l'une des revendications 1 à 13 **caractérisé en ce qu'**il est constitué par un autocuiseur.

## Claims

1. A domestic food pressure cooking appliance comprising a bowl (1) provided with a side wall (1A) and a lid (2) which can be positioned and locked on said bowl (1), said lid (2) and side wall (1A) co-operating, when the lid (2) is positioned and locked on the bowl, to define an annular interstitial space (6) having an initial cross section having a predetermined radial dimension, termed the initial dimension (DI), said interstitial space (6) being intended to receive an annular gasket (7) designed to be interposed between the side wall (1A) and the lid (2) to produce a cooking vessel that is substantially leaktight, the appliance being **characterized in that** the bowl (1), the lid (2), and the gasket (7) are designed so that when the pressure inside the vessel reaches a predetermined critical safety value, the interstitial space (6) at least locally has a critical cross section having a predetermined radial dimension, termed the critical dimension (DC), which is greater than the initial dimension (DI), the difference between the initial dimension (DI) and the critical dimension (DC) being sufficiently great for the leaktight contact between the gasket (7) and the side wall (1A) and/or the lid (2) to be broken, thus causing decompression of the vessel.

2. An appliance according to claim 1, **characterized in that** passage from the initial cross section to the critical cross section is at least partially achieved by displacement of the lid (2) relative to the bowl (1).

3. An appliance according to claim 2, **characterized in that** passage from the initial cross section to the critical cross section is at least partially achieved by axial translation of the lid (2) relative to the bowl (1).

4. An appliance according to any one of claims 1 to 3, **characterized in that** passage from the initial cross section to the critical cross section is at least partially achieved by radial deformation of the bowl (1).

5. An appliance according to any one of claims 1 to 4, **characterized in that** the side wall (1A) extends vertically between a base (1B) and an upper opening (1C), said side wall (1A) extending in a manner that diverges substantially from the base to the upper opening (1C), in the zone defining the interstitial space, the lid (2) comprising a side edge (2B) for insertion inside the lid (1) when the lid (2) is positioned and locked thereon, the annular interstitial space (6) extending radially between the side wall (1A) and the side edge (2B).

6. An appliance according to any one of claims 1 to 5, **characterized in that** the cross section of the gasket (7) is U-shaped, the arms of the U each respectively forming a first and a second lip (7A, 7B) while the web of the U forms the bead (51) of the gasket (7), the first lip (7A) ensuring leaktight contact with the side wall (1A), the second lip (7B) ensuring leaktight contact with the lid (2) when the latter is positioned and locked on the bowl (1).

7. An appliance according to any one of claims 1 to 6, **characterized in that** the stiffness of at least one angular sector (15, 16, 17, 18, 19, 20, 21) of the gasket (7) is greater in a radial direction than that of the remainder of the gasket (7).

8. An appliance according to claims 6 and 7, **characterized in that** said at least one angular sector (15, 16, 17, 18, 19, 20, 21) is provided with at least one first stiffening means (24, 25) for the first lip (7A), to limit its flexibility.

9. An appliance according to claim 8, **characterized in that** the first stiffening means comprises an excess thickness (25) of the first lip (7A).

10. An appliance according to claim 8 or claim 9, **characterized in that** said at least one angular sector (15, 16, 17, 18, 19, 20, 21) of the gasket (7) is provided with at least one second stiffening means (26) for the second lip (7A) to limit its flexibility.

11. An appliance according to claim 10, **characterized in that** said at least one first and second stiffening means are formed by at least one unique stiffening means, mechanically connecting the first and second lips (7A, 7B).

12. An appliance according to claim 11, **characterized in that** the unique stiffening means comprises a U-shaped reinforcement (40) integrated into a cross section of the gasket.

13. An appliance according to any one of claims 1 to 12, **characterized in that** passage from the initial cross section to the critical cross section is at least partially obtained by displacement of the gasket (7) relative to the lid (2).

14. An appliance according to any one of claims 1 to 13, **characterized in that** it is constituted by a pressure cooker.

## Patentansprüche

1. Haushaltsgerät zum Garen von Nahrungsmitteln unter Druck, das einerseits eine Wanne (1) aufweist, die mit einer Seitenwand (1A) versehen ist, und andererseits mit einem Deckel (2), der dazu bestimmt ist, auf die Wanne (1) aufgesetzt und auf ihr verriegelt zu werden, wobei der Deckel (2) und die Seitenwand (1A), wenn der Deckel (2) auf die Wanne aufgesetzt und auf ihr verriegelt ist, einen ringförmigen Zwischenraum (6) bilden, der einen Ausgangsquerschnitt mit vorbestimmtem radialem Maß, Ausgangsmaß (DI) genannt, aufweist, wobei der Zwischenraum (6) dazu bestimmt ist, eine ringförmige Dichtung (7) aufzunehmen, die konzipiert ist, um sich zwischen die Seitenwand (1A) und den Deckel (2) derart zu fügen, dass ein im Wesentlichen dichter Gareinschluss gebildet wird, **dadurch gekennzeichnet, dass** die Wanne (1), der Deckel (2) und die Dichtung (7) dazu konzipiert sind, dass, wenn der Druck, der in dem Einschluss herrscht, einen vorbestimmten kritischen Sicherheitsdruck erreicht, der Zwischenraum (6) mindestens lokal einen kritischen Querschnitt mit vorbestimmtem radialem Maß, kritisches Maß (DC) genannt, aufweist, das größer ist als das Ausgangsmaß (DI), wobei der Unterschied zwischen dem Ausgangsmaß (DI) und dem kritischen Maß (DC) ausreichend groß ist, damit der dichte Kontakt zwischen einerseits der Dichtung (7) und andererseits der Seitenwand (1A) und/oder dem Deckel (2) unterbrochen wird, wodurch ein Unterdruck des Einschlusses erzeugt wird.

2. Gerät nach Anspruch 1, **dadurch gekennzeichnet, dass** der Übergang von dem Anfangsquerschnitt auf den kritischen Querschnitt zumindest teilweise durch Bewegen des Deckels (2) in Bezug zu der Wanne (1) erzielt wird.

3. Gerät nach Anspruch 2, **dadurch gekennzeichnet, dass** der Übergang von dem Anfangsquerschnitt auf den kritischen Querschnitt zumindest teilweise durch axiales Verschieben des Deckels (2) in Bezug zu der Wanne (1) erzielt wird.

4. Gerät nach einem der Ansprüche 1 bis 3, **dadurch gekennzeichnet, dass** der Übergang von dem Anfangsquerschnitt auf den kritischen Querschnitt zumindest teilsweise durch radiales Verformen der Wanne (1) erzielt wird.

5. Gerät nach einem der Ansprüche 1 bis 4, **dadurch gekennzeichnet, dass** sich die Seitenwand (1A) vertikal zwischen einem Boden (1B) und einer oberen Öffnung (1C) erstreckt, wobei sich die Seitenwand (1A) im Wesentlichen divergierend von dem Boden zu der oberen Öffnung (1C) in der Definitionszone des Zwischenraums erstreckt, wobei der Deckel (2) einen Seitenrand (2B) aufweist, der dazu bestimmt ist, in das Innere der Wanne (1) eingefügt zu werden, wenn der Deckel (2) auf diese Letztere aufgesetzt und auf ihr verriegelt wird, wobei sich der ringförmige Zwischenraum (6) radial zwischen der Seitenwand (1A) und dem seitlichen Rand (2B) erstreckt.

6. Gerät nach einem der Ansprüche 1 bis 5, **dadurch gekennzeichnet, dass** die Dichtung (7) einen U-förmigen Querschnitt aufweist, wobei die Schenkel des U jeweils eine erste und eine zweite Lippe (7A, 7B) bilden, während die Seele des U den Absatz (51) der Dichtung (7) bildet, wobei die erste Lippe (7A) dazu bestimmt ist, einen dichten Kontakt mit der Seitenwand (1A) sicherzustellen, wobei die zweite Lippe (7B) dazu bestimmt ist, einen dichten Kontakt mit dem Deckel (2) sicherzustellen, wenn dieser Letztere auf die Wanne (1) aufgesetzt und auf ihr verriegelt ist.

7. Gerät nach einem der Ansprüche 1 bis 6, **dadurch gekennzeichnet, dass** mindestens ein Winkelsektor (15, 16, 17, 18, 19, 20, 21) der Dichtung (7) in die radiale Richtung eine Steifigkeit aufweist, die größer ist als die des Rests der Dichtung (7).

8. Gerät nach den Ansprüchen 6 und 7, **dadurch gekennzeichnet, dass** der mindestens eine Winkelsektor (15, 16, 17, 18, 19, 20, 21) mit mindestens einem ersten Versteifungsmittel (24, 25) der ersten Lippe (7A) zum Beschränken ihrer Biegsamkeit versehen ist.

9. Gerät nach Anspruch 8, **dadurch gekennzeichnet, dass** das erste Versteifungsmittel eine Überdicke (25) der ersten Lippe (7A) aufweist.

10. Gerät nach einem der Ansprüche 8 oder 9, **dadurch gekennzeichnet, dass** der mindestens eine Winkelsektor (15, 16, 17, 18, 19, 20, 21) der Dichtung (7) mit mindestens einem zweiten Versteifungsmittel (26) der zweiten Lippe (7A) zum Begrenzen ihrer Biegsamkeit versehen ist.

11. Gerät nach Anspruch 10, **dadurch gekennzeichnet, dass** das mindestens eine erste und zweite Versteifungsmittel durch mindestens ein einziges Versteifungsmittel gebildet werden, das die erste und die zweite Lippe (7A, 7B) mechanisch verbindet.

12. Gerät nach Anspruch 11, **dadurch gekennzeichnet, dass** das einzige Versteifungsmittel eine Bewehrung (40) in U-Form aufweist, die in einen Querschnitt der Dichtung eingebaut ist.

13. Gerät nach einem der Ansprüche 1 bis 12, **dadurch gekennzeichnet, dass** der Übergang von dem Anfangsquerschnitt auf den kritischen Querschnitt zumindest teilweise durch Bewegen der Dichtung (7) in Bezug zu dem Deckel (2) erzielt wird.

14. Gerät nach einem der Ansprüche 1 bis 13, **dadurch gekennzeichnet, dass** es aus einem Schnellkochtopf besteht.
